(19)

Europäisches
Patentamt
European
Patent Office
Office européen
des brevets

(11) **EP 2 665 111 A2**

(12) **EUROPEAN PATENT APPLICATION**

(43) Date of publication:
**20.11.2013 Bulletin 2013/47**

(21) Application number: **13002545.5**

(22) Date of filing: **15.05.2013**

(51) Int Cl.:
*H01M 4/131* (2010.01)  *H01M 4/1391* (2010.01)
*H01M 4/48* (2010.01)  *H01M 10/0525* (2010.01)
*H01M 4/525* (2010.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **18.05.2012 JP 2012114325**

(71) Applicant: **Shin-Etsu Chemical Co., Ltd.
Chiyoda-ku,
Tokyo (JP)**

(72) Inventors:
• **Ohba, Toshio**
  **Annaka-shi, Gunma-ken (JP)**
• **Miyawaki, Satoru**
  **Annaka-shi, Gunma-ken (JP)**
• **Ikeda, Tatsuhiko**
  **Annaka-shi, Gunma-ken (JP)**

(74) Representative: **Wibbelmann, Jobst
Wuesthoff & Wuesthoff
Patent- und Rechtsanwälte
Schweigerstrasse 2
81541 München (DE)**

(54) **Lithium ion secondary battery**

(57)    The present invention intends to provide a lithium ion secondary battery that has a high capacity and excellent charge/discharge cycle characteristics. A lithium ion secondary battery includes: a positive electrode; and a negative electrode, wherein the negative electrode includes a negative electrode active material of which initial charge capacity is 1800 mAh/g or more and initial efficiency (initial discharge capacity/initial charge capacity) is 0.70 to 0.85, the positive electrode includes a positive electrode active material of which initial charge capacity is 160 mAh/g or more and initial efficiency (initial discharge capacity/initial charge capacity) is 0.75 to 0.90, and an initial discharge capacity ratio of the negative electrode and the positive electrode (initial discharge capacity of the negative electrode/initial discharge capacity of the positive electrode) is 0.90 to 1.30.

EP 2 665 111 A2

**Description**

BACKGROUND OF THE INVENTION

1. Field of the Invention

The present invention relates to a lithium ion secondary battery, in more detail, a lithium ion secondary battery that has a high capacity and is excellent in cycle characteristics.

2. Description of the Related Art

With the remarkable development of portable electronic devices and communication devices in recent years, from the viewpoint of economic efficiency, and miniaturization and weight saving of devices, a demand for a secondary battery having a high energy density is strong.

As a means for achieving this demand, a method where silicon oxide is used as a negative electrode active material (see patent document 1), and a method where a carbon layer is coated on a surface of silicon oxide particles by chemical deposition method (see patent document 2) can be cited.
Further, a method where a ratio of an initial efficiency of a positive electrode and an initial efficiency of a negative electrode is limited (see patent document 3) has been proposed.

[Patent Document 1] Japanese Patent No. 2997741
[Patent Document 2] JP No. 2002-42806 A
[Patent Document 3] JP No. 11-45742 A

SUMMARY OF THE INVENTION

However, according to methods described in the patent documents 1 and 2, although a charge/discharge capacity of a negative electrode can be improved, an initial efficiency that is a ratio of an initial discharge capacity and an initial charge capacity is low; accordingly, a large improvement in a battery capacity is not necessarily satisfactory.

Further, according to a method of patent document 3, when a ratio of an initial efficiency of a positive electrode and an initial efficiency of a negative electrode is limited, a defect that initial efficiencies of a positive electrode and a negative electrode are low can be compensated, that is, there is a definite effect in obtaining a battery having a high capacity. However, a large improvement in a battery capacity is not satisfactory and a further improvement in a battery capacity has been desired.
It was difficult to improve, while obtaining such the high capacity, also the charge/discharge cycle characteristics.

The present invention was performed in view of the problems, and intends to provide a lithium ion secondary battery that has a high capacity and is excellent also in charge/discharge cycle characteristics.

Means for Solving the Problem

In order to achieve the object, the present invention provides a lithium ion secondary battery that includes a negative electrode and a positive electrode, the negative electrode being configured of a negative electrode active material of which an initial charge capacity is 1800 mAh/g or more and an initial efficiency (initial discharge capacity/ initial charge capacity) is 0.70 to 0.85, the positive electrode being configured of a positive electrode active material of which an initial charge capacity is 160 mAh/g or more and an initial efficiency (initial discharge capacity/initial charge capacity) is 0.75 to 0.90, an initial discharge capacity ratio of the negative electrode and the positive electrode (initial discharge capacity of the negative electrode/initial discharge capacity of the positive electrode) being 0.90 to 1.30.

According to such the lithium ion secondary battery, a lithium ion secondary battery that can efficiently use a negative electrode active material and a positive electrode active material, has a high capacity, and is excellent in the charge/discharge cycle characteristics can be obtained.

] At this time, an initial discharge capacity ratio of the negative electrode and the positive electrode is preferably 1.05 to 1.15.
According to such the initial discharge capacity ratio of the negative electrode and the positive electrode, a lithium ion secondary battery that has a higher battery capacity, is excellent in the charge/discharge cycle characteristics and can surely prevent problems such as short-circuiting from occurring can be obtained.

At this time, it is preferable for the negative electrode active material to be silicon oxide represented by SiOx $(0.5 \leq x \leq 1.5)$, or for the negative electrode active material to be a silicon composite having a structure where silicon is dispersed in silicon oxide and a mol ratio of Si/O is 0.67 to 2.0.

According to such the negative electrode active material, a lithium ion secondary battery that is excellent in the charge discharge cycle characteristics and has a higher battery capacity can be obtained.

Further, the silicon composite is preferably covered with a carbon film.

According to such the silicon composite covered with a carbon film, a lithium ion secondary battery to which sufficient conductivity is imparted, which has a high capacity, and in which the charge/discharge cycle characteristics are surely improved can be obtained.

As was described above, according to the present invention, a lithium ion secondary battery that is excellent in the charge/discharge cycle characteristics and has a high battery capacity can be obtained.

## DETAILED DESCRIPTION OF THE PREFERRED EMBODIMENTS

The present inventors have studied to improve a capacity and charge/discharge cycle characteristics of a lithium ion secondary battery. As a result thereof, the inventors have found that even when a capacity of each of a positive electrode active material and a negative electrode active material is simply improved, or even when only a ratio of initial efficiencies of a positive electrode and a negative electrode is limited, a charge/discharge capacity of a battery can not be largely improved.

There, after studying hard, the present inventors have found that when, by paying an attention on a charge capacity and an initial efficiency of each of a positive electrode active material and a negative electrode active material, a positive electrode active material and a negative electrode active material are selected so that charge capacities of both are high and an initial efficiency of each thereof may be in the range of the present invention, and an initial discharge capacity ratio of a negative electrode and a positive electrode prepared therewith is limited, a higher capacity and an improvement in the charge/discharge cycle characteristics of a battery can be achieved, and completed the following present invention.

Hereinafter, the present invention will be detailed as an example of an embodiment. However, the present invention is not limited thereto.

A negative electrode of a lithium ion secondary battery of the present invention includes a negative electrode active material having an initial charge capacity of 1800 mAh/g or more and an initial efficiency (initial discharge capacity/ initial charge capacity) of 0.70 to 0.85.

Unless the negative electrode active material is like this, even when an initial discharge capacity ratio of a negative electrode and a positive electrode is 0.90 to 1.30, sufficiently excellent battery capacity and charge/discharge cycle characteristics cannot be obtained.

As the negative electrode active material, for example, a silicon-based negative electrode active material having a high initial charge capacity, above all, $SiOx$ is preferable. Since when x is 1.5 or more, an initial efficiency and a capacity degrade, and when x is smaller than 0.5, charge/discharge cycle characteristics degrade; accordingly, x is preferably $0.5 \leq x \leq 1.5$.

Further, it is preferable that as a negative electrode active material in the present invention, a silicon composite that has a structure where silicon (silicon nanoparticles) is dispersed in silicon oxide and a mol ratio of Si/O of 0.67 to 2.0 is used, because a battery capacity can be preferably improved.

Such the silicon composite can be obtained according to, for example, a method where fine particles of silicon and a silicon compound are mixed and fired, or a method where silicon oxide particles represented by $SiOx$ and before disproportionation are heated at a temperature of 400°C or more, preferably 800 to 1000°C in an inert non-oxidizing atmosphere such as argon to conduct a disproportionation reaction. In particular, a material obtained according to the latter method is preferable because fine crystals of silicon are uniformly dispersed in silicon oxide. According to such the disproportionation reaction, a particle size of silicon nanoparticles can be reduced to 1 to 100 nm. Further, silicon oxide in a silicon composite is preferably silicon dioxide. By using a transmission electron microscope, it can be confirmed that silicon nanoparticles (crystal) are dispersed in amorphous silicon oxide.

Further, since silicon oxide is an insulator, it is preferable to impart conductivity in one way or another. As a method for imparting the conductivity, a method where silicon oxide and conductive particles such as graphite are mixed, a method where a surface of particles of the silicon composite is coated with a carbon film, and a method where both of the above are combined can be cited.

As a method for coating with a carbon film, for example, a method where a silicon composite is processed by chemical vapor deposition (CVD) in an organic gas and/or steam is preferable, and during heating, by introducing an organic gas and/or steam in a reactor, the method can be efficiently conducted. Examples of organic substances include: hydrocarbons such as methane, ethane, ethylene, acetylene, propane, butane, butene, pentane, isobutane, and hexane or mixtures thereof; and aromatic hydrocarbons such as benzene, toluene, xylene, styrene, ethyl benzene, diphenyl methane, naphthalene, phenol, cresol, nitrobenzene, and chlorobenzene or mixtures thereof. Further, gas light oil, creosote oil, anthracene oil, and naphtha-cracking tar oil obtained in the tar distillation step or mixtures thereof.

Although a coating amount of a carbon film is not particularly limited, a ratio of carbon is desirably 0.3 to 40 mass %, and more desirably 0.5 to 30 mass %, with respect to an entirety of particles coated with carbon.

By setting a carbon coating amount at 0.3 mass % or more, sufficient conductivity can be maintained, and, thereby when using as a negative electrode of a lithium ion secondary battery, an improvement in the cycle property can be surely achieved. Further, when a carbon coating amount is set to 40 mass % or less, likelihood of generating a situation where, because a ratio of carbon in a negative electrode active material becomes abundant, a charge/discharge capacity is degraded when used as a negative electrode active material for a lithium ion secondary battery can be lowered.

Such the negative electrode active material, a binder such as polytetrafluoroethylene, polyvinylidene fluoride, polyimide, polyamideimide, and SBR emulsion, and, as required, a conductive agent such as acetylene black and graphite are kneaded together with an organic solvent such as N-methyl-2-pyrrolidone or water to prepare a negative electrode coating material. When the coating material is coated on a current collector such as a copper foil and dried, a negative electrode can be obtained. In the present invention, a binder, an organic solvent, a conductive agent and a current collector are not particularly limited and can be variously selected.

A positive electrode active material in the present invention is a lithium-containing metal compound that can emit and absorb a lithium ion, and has an initial charge capacity of 160 mAh/g or more and an initial efficiency (initial discharge capacity/initial charge capacity) of 0.75 to 0.90. For example, as a lithium-containing metal compound that contains electrochemically emittable lithium, lithium composite nickel oxide, lithium composite manganese oxide, or mixtures thereof, further a system obtained by adding one kind or more of different metal elements to these composite oxides can be used.

Unless a positive electrode active material is such the positive electrode active material, even when an initial discharge capacity ratio of a negative electrode and a positive electrode is 0.90 to 1.30, sufficiently excellent battery capacity and charge/discharge cycle characteristics can not be obtained.

A positive electrode of the present invention may well be formed by making the positive electrode active material an electrode according to a well-known method, for example, by using a binder, can be formed on a current collector. Further, as required, a conductive agent can be added.

The present invention is a lithium ion secondary battery that has, such as described above, an initial discharge capacity ratio (initial discharge capacity of a negative electrode/initial discharge capacity of positive electrode) of a negative electrode and a positive electrode of 0.90 to 1.30.

When the initial discharge capacity ratio of a negative electrode and a positive electrode is smaller than 0.90 or larger than 1.30, a positive electrode active material and a negative electrode active material are not effectively used for charge/discharge, and a charge/discharge capacity per active material (sum total of a negative electrode active material and a positive electrode active material) becomes lower. Accordingly, by setting an initial discharge capacity ratio of a negative electrode and a positive electrode at 0.90 to 1.30, a lithium ion secondary battery that are excellent in both of battery capacity and charge/discharge cycle characteristics can be obtained.

Further, when an initial discharge capacity ratio of a negative electrode and a positive electrode is as near to 1 as possible, a battery capacity becomes high. However, when an initial discharge capacity of a positive electrode is more abundant than an initial discharge capacity of a negative electrode, lithium piles dendritically on a surface of a negative electrode to may cause short-circuiting of a negative electrode and a positive electrode; accordingly, the initial discharge capacity ratio of a negative electrode and a positive electrode is preferably 1.05 to 1.15.

In a lithium ion secondary battery of the present invention, when a separator is disposed between a positive electrode and a negative electrode to retain insulation and an electrolytic solution, the separator is not particularly limited. Examples of the separators include a polyethylene microporous film, a polypropylene microporous film, or a laminate film of polyethylene and polypropylene, a woven fabric or a nonwoven fabric configured of cellulose, glass fiber, aramid fiber, or polyacrylonitrile fiber. These can be appropriately determined according to the object and situation.

As a nonaqueous electrolyte used in a lithium ion secondary battery of the present invention, well-known nonaqueous electrolytes such as a nonaqueous electrolytic solution containing a lithium salt, a polymer electrolyte, and a polymer gel electrolyte can be used and can be appropriately determined according to kinds and property of a positive electrode active material and a negative electrode active material and use condition such as charge voltage thereof. Further, as a nonaqueous electrolytic solution containing a lithium salt, for example, a lithium salt such as $LiPF_6$, $LiBF_4$, or $LiClO_4$ that is dissolved in an organic solvent configured of one or two kinds of propylene carbonate, ethylene carbonate, diethyl carbonate, dimethyl carbonate, methylethyl carbonate, dimethoxyethane, $\gamma$-butylolactone, methyl acetate and methyl formate, is used. A concentration of lithium salt is, without particularly limiting, generally practical to be about 0.5 to 2 mol/l. An electrolytic solution having a moisture content of 100 ppm or less is preferably used.

A shape and a size of a lithium ion secondary battery of the present invention are not particularly limited. However, according to the respective uses, a secondary battery having an optional shape and dimension such as cylinder, square, flat and box can be selected.

According to the present invention such as described above, a lithium ion secondary battery having excellent charge/discharge cycle characteristics and high battery capacity can be obtained.

EXAMPLES

Hereinafter, with reference to examples and embodiments, the present invention will be more detailed. However, the present invention is not limited thereto.

<Carbon-coated SiOx (negative electrode active material)>

100 g of SiOx (x = 1.01) having an average particle diameter of 5 $\mu$m and a BET specific surface are of 3.5 $m^2$/g was put in a batch type heating furnace so that a thickness of a powder layer may be 10 mm. While depressurizing the inside of the furnace with an oil rotary vacuum pump, the inside of the furnace was heated to 900°C, after reaching 900°C, a $CH_4$ gas was flowed at 0.3 NL/min, and a carbon coating process was conducted for 5 hrs. Thereafter, while flowing a $CH_4$ gas at 0.3 NL/min, the inside of the furnace was heated to 1100°C at 50°C/hr, and held there for three hrs. The decompression degree at this time was 800 Pa. After the process, a temperature was lowered, and 106 g of particles of a black negative electrode active material was obtained.
Obtained particles of a negative electrode active material had an average particle size of 5.2 $\mu$m and a BET specific surface area of 6.5 $m^2$/g, and a carbon amount measured with EMIA-110 manufactured by Horiba Ltd. was 5.7 mass %.

<Preparation of Negative Electrode>

(1) Negative electrode A, B, C

95 mass % of a negative electrode active material obtained by CVD coating of the SiOx with carbon and 5 mass % of a polyimide resin (U-varnish A, manufactured by Ube Industries. Ltd.) as a binder were mixed, further 50 mass % of N-methyl pyrolidone as a solvent was added, the mixture was mixed by using a mixer, and a slurry was obtained. The slurry was coated by a blade coater on a copper foil having a thickness of 12 $\mu$m, after drying at 80°C for 1 hr, was pressure molded into an electrode by a roller press, and the electrode was vacuum dried for 1 hr at 350°C. Thereafter, by punching into 2 $cm^2$, a negative electrode was obtained. A coating amount of a negative electrode mixture layer (negative electrode active material + binder) of the obtained negative electrode was 0.0043 g/2 $cm^2$. This is taken as a negative electrode A.

In order to evaluate battery characteristics of the negative electrode A, by using a lithium foil as a counter electrode, a nonaqueous electrolytic solution obtained by dissolving lithium hexafluorophosphate at a concentration of 1 mol/L in a 1:1 (by volume ratio) mixed solution of ethylene carbonate and diethyl carbonate as a nonaqueous electrolyte, and a polyethylene microporous film having a thickness of 30 $\mu$m as a separator, a coin shaped lithium ion secondary battery for evaluating a negative electrode active material was prepared.

The lithium ion secondary battery prepared for evaluation was left at room temperature overnight. After that, by using a secondary battery charge/discharge tester (manufactured by Nagano Co., Ltd.), until a voltage of a test cell reaches 0 V, constant current charge was conducted at 0.5 mA/$cm^2$, and after reaching 0V, charge was conducted by reducing a current so as to maintain a cell voltage at 0 V. Then, at a time point when a current value became less than 40 $\mu$A/$cm^2$, the charge was finished. An initial charge capacity of a negative electrode obtained therefrom was 7.97 mAh/2 $cm^2$, and an initial charge capacity per active material was 1944 mAh/g.
Further, discharge was conducted at a constant current of 0.5 mA/$cm^2$ and finished at a time point where a cell voltage reached 1.4 V. An initial discharge capacity obtained therefrom was 5.82 mAh/2 $cm^2$.

Further, an initial efficiency obtained from the following formula (1) was 0.73.

$$\text{Initial efficiency} = \text{initial discharge capacity/initial charge capacity} \quad (1)$$

Except that a gap of a blade coater was changed, in a manner the same as that of the negative electrode A, a negative electrode B was prepared by setting a coating amount of a negative electrode mixture layer (negative electrode active material + binder) at 0.0051 g/2 $cm^2$. An initial charge capacity of the negative electrode B was 9.45 mAh/2 $cm^2$ and an initial discharge capacity was 6.90 mAh/2 $cm^2$.
Further, in a manner the same as that of the negative electrode B, a negative electrode C where a coating amount of a negative electrode mixture layer (negative electrode active material + binder) was set at 0.0036 g/2 $cm^2$ was prepared. An initial charge capacity of the negative electrode material C was 6.67 mAh/2 $cm^2$ and an initial discharge capacity was 4.87 mAh/2 $cm^2$.

(2) Negative electrode D

A negative electrode D where graphite is used as a negative electrode active material was prepared and a battery was evaluated.

95 mass % of a graphite active material configured of spherical granulated graphite (particle size D50 = 10 $\mu$m, CGB-10, manufactured by Nippon Graphite Industries, Ltd.) and 5 mass % of a PVDF resin as a binder were mixed, further 50 mass % of N-methyl pyrolidone as a solvent was added, and the mixture was mixed by using a mixer to obtain a slurry. The slurry was coated by using a blade coater on a copper foil having a thickness of 12 $\mu$m, and, after drying at 80°C for 1 hr, was pressure molded into an electrode by a roller press, and the electrode was vacuum dried for 1 hr at 180°C. Thereafter, by punching into 2 cm$^2$, a negative electrode D was obtained. A coating amount of a negative electrode mixture layer (negative electrode active material + binder) of the obtained negative electrode D was 0.0197 g/2 cm$^2$.

An initial charge capacity of a negative electrode D obtained in a manner the same as that of the negative electrode A was 6.73 mAh/2 cm$^2$, an initial charge capacity per active material was 360 mAh/g, an initial discharge capacity of a negative electrode D was 6.26 mAh/g, an initial discharge capacity per electrode active material was 335 mAh/g and an initial efficiency was 0.93.

In Table 1, test results of battery characteristics when lithium was used as a counter electrode of negative electrodes A to D are shown.

<Synthesis Example of Positive Electrode Active Material>

Nickel nitrate and cobalt nitrate were mixed in an aqueous solution so that Ni/Co may be 0.8/0.2 (mol ratio), the solution was dried with a spray dryer, and almost spherical particles were obtained. The particles and lithium hydroxide were mixed at a ratio of Li/Ni/Co = 1/0.8/0..2 (mol ratio), the mixture was fired at 900°C for 5 hrs under oxidizing atmosphere, and a positive electrode active material $LiNi_{0.8}Co_{0.2}O_2$ was obtained. An average particle diameter of the resulted particles was 15 $\mu$m.

<Preparation Example of Positive Electrode>

(1) Positive electrode E, F, G

93 mass % of the resulted positive electrode active material, 3 mass % of a PVDF resin, 4 mass % of acetylene black as a conductive agent, and 67 mass % of N-methyl-2-pyrolidone as a solvent were mixed by using a mixer and a slurry was obtained. The slurry was coated by using a blade coater on an aluminum foil having a thickness of 20 $\mu$m, after drying at 80°C for 1 hr, was pressure molded into an electrode by a roller press, and the electrode was vacuum dried for 1 hr at 180°C. Thereafter, by punching into 2 cm$^2$, a positive electrode E was obtained. A coating amount of a positive electrode mixture layer (positive electrode active material + binder + conductive agent) of the obtained positive electrode E was 0.0364 g/2 cm$^2$.

In order to evaluate battery characteristics of the resulted positive electrode active material, by using a lithium foil as a counter electrode, a nonaqueous electrolytic solution obtained by dissolving lithium hexafluorophosphate at a concentration of 1 mol/L in a 1:1(by volume ratio) mixed solution of ethylene carbonate and diethyl carbonate as a nonaqueous electrolyte, and a polyethylene microporous film having a thickness of 30 $\mu$m as a separator, a coin shaped lithium ion secondary battery for evaluation was prepared.

The prepared lithium ion secondary battery for evaluation was left at room temperature overnight. After that, by using a secondary battery charge/discharge tester (manufactured by Nagano Co., Ltd.), until a voltage of a test cell reaches 4.2 V, constant current charge was conducted at 0.5 mA/cm$^2$, and after reaching 4.2 V, charge was conducted by reducing a current so as to maintain a cell voltage at 4.2 V. Then, at a time point when a current value became less than 40 $\mu$A/cm$^2$, the charge was finished. Therefrom, an initial charge capacity of the positive electrode E was obtained as 6.36 mAh/2 cm$^2$, and an initial charge capacity per active material was obtained as 188 mAh/g. Further, discharge was conducted at a constant current of 0.5 mA/cm$^2$ and finished at a time point where a cell voltage reached 3.0 V. Therefrom, an initial discharge capacity of the positive electrode E was obtained as 5.53 mAh/2 cm$^2$. Further, an initial efficiency was 0.87.

Except that a gap of a blade coater was changed, in a manner the same as that of the positive electrode E, a positive electrode F where a coating amount of a positive electrode mixture layer (positive electrode active material + binder + conductive agent) is set to 0.0403 g/2 cm$^2$ was prepared. An initial charge capacity of the positive electrode F was 7.02 mAh/2 cm$^2$ and an initial discharge capacity was 6.11 mAh/ 2 cm$^2$.

Further, in a manner the same as that of the positive electrode F, a positive electrode G where a coating amount of a positive electrode mixture layer (negative electrode active material + binder + conductive agent) was set to 0.0318 g/2 cm$^2$ was prepared. An initial charge capacity of the positive electrode G was 5.56 mAh/2 cm$^2$ and an initial discharge capacity was 4.82 mAh/ 2 cm$^2$.

(2) Positive Electrode H

By mixing 93 mass % of lithium cobalt oxide having an average particle size of 15 $\mu$m and a BET specific surface area of 3.5 m$^2$/g, 3 mass % of a PVDF resin as a binder, 4 mass % of acetylene black as a conductive agent and 67 mass % of N-methyl-2-pyrolidone as a solvent, a slurry was obtained. Further, by coating the slurry by using a blade coater on an aluminum foil and drying, a positive electrode H was obtained. A coating amount of a positive electrode mixture layer (positive electrode active material + binder + conductive agent) of the obtained positive electrode H was 0.0412 g/2 cm$^2$.
Further, an initial charge capacity of the positive electrode H obtained according to a manner the same as that of the positive electrode E was 6.13 mAh/2 cm$^2$, an initial charge capacity per active material was 160 mAh/g, an initial discharge capacity was 5.90 mAh/2 cm$^2$, an initial discharge capacity per active material was 144 mAh/g and an initial efficiency was 0.96.

In Table 1, test results of battery characteristics of negative electrodes A to D and positive electrodes E to H when lithium was used as a counter electrode are shown.
[Table 1]

| Electrode plate | Active material | (1) | (2) | (3) | (4) | (5) | (6) |
|---|---|---|---|---|---|---|---|
| | | g/2 cm$^2$ | g/2 cm$^2$ | mAh/2 cm$^2$ | mAh/2 cm$^2$ | mAh/g | |
| Negative electrode A | $SiO_x$ (x = 1.01) | 0.0043 | 0.0041 | 7.97 | 5.82 | 1944 | 0.73 |
| Negative electrode B | $SiO_x$ (x = 1.01) | 0.0051 | 0.0048 | 9.45 | 6.90 | 1969 | 0.73 |
| Negative electrode C | $SiO_x$ (x = 1.01) | 0.0036 | 0.0034 | 6.67 | 4.87 | 1962 | 0.73 |
| Negative electrode D | Graphite | 0.0197 | 0.0187 | 6.73 | 6.26 | 360 | 0.93 |
| Positive electrode E | $LiNi_{0.8}Co_{0.2}O_2$ | 0.0364 | 0.0339 | 6.36 | 5.53 | 188 | 0.87 |
| Positive electrode F | $LiNi_{0.8}Co_{0.2}O_2$ | 0.0403 | 0.0375 | 7.02 | 6.11 | 187 | 0.87 |
| Positive electrode G | $LiNi_{0.8}Co_{0.2}O_2$ | 0.0318 | 0.0296 | 5.56 | 4.82 | 188 | 0.87 |
| Positive electrode H | $LiCoO_2$ | 0.0412 | 0.0383 | 6.13 | 5.90 | 160 | 0.96 |

Note (1) Coating amount of electrode mixture
(2) Coating amount of active material
(3) Initial charge capacity
(4) Initial discharge capacity
(5) Initial charge capacity/active material
(6) Initial efficiency

(Example 1)

By using the negative electrode A, the positive electrode E, a nonaqueous electrolytic solution obtained by dissolving lithium hexafluorophosphate at a concentration of 1 mol/L in a 1:1(votume ratio) mixed solution of ethylene carbonate and diethyl carbonate as a nonaqueous electrolyte, and a polyethylene microporous film having a thickness of 30 $\mu$m as a separator, a coin shaped lithium ion secondary battery was prepared.
An initial discharge capacity of the negative electrode A was 5.82 mAh/2 cm$^2$, an initial discharge capacity of the positive electrode E was 5.53 mAh/2 cm$^2$, and an initial discharge capacity ratio (initial discharge capacity of negative electrode/ initial discharge capacity of positive electrode) of the negative electrode A and positive electrode E was 1.05.
When charge/discharge of the resulted coin shaped battery was conducted under condition of temperature of 25°C, current of 2 mA/cm$^2$, and voltage of 3.0 V-4.2 V-3.0 V, an initial discharge capacity was 4.75 mAh. A total mass of a positive electrode active material and a negative electrode active material was 0.0380 g, an initial discharge capacity per mass of active material was 125 mAh/g, and a discharge capacity retention rate after 100 cycles of charge/discharge was 91%.

(Example 2)

By using the negative electrode A and the positive electrode F, in a manner the same as that of Example 1, a coin shaped lithium ion secondary battery was prepared.
An initial discharge capacity of the negative electrode A was 5.82 mAh/2 cm$^2$, an initial discharge capacity of the positive electrode F was 6.11 mAh/2 cm$^2$, and an initial discharge capacity ratio of the negative electrode A and positive electrode F was 0.95.
In a manner the same as that of Example 1, charge/discharge was conducted, and an initial discharge capacity was 4.99 mAh. A total mass of a positive electrode active material and a negative electrode active material was 0.0416 g, an initial discharge capacity per mass of active material was 120 mAh/g, and a discharge capacity retention rate after 100 cycles of charge/discharge was 85%.

(Example 3)

By using the negative electrode B and the positive electrode E, in a manner the same as that of Example 1, a coin shaped lithium ion secondary battery was prepared.
An initial discharge capacity of the negative electrode B was 6.90 mAh/2 cm$^2$, an initial discharge capacity of the positive electrode E was 5.53 mAh/2 cm$^2$, and an initial discharge capacity ratio of the negative electrode B and positive electrode E was 1.25.
In a manner the same as that of Example 1, charge/discharge was conducted, and an initial discharge capacity was 4.33 mAh. A total mass of a positive electrode active material and a negative electrode active material was 0.0387 g, a discharge capacity per mass of active material was 112 mAh/g, and a discharge capacity retention rate after 100 cycles of charge/discharge was 93%.

(Comparative Example 1)

By using the negative electrode C and the positive electrode F, in a manner the same as that of Example 1, a coin shaped lithium ion secondary battery was prepared.
An initial discharge capacity of the negative electrode C was 4.87 mAh/2 cm$^2$, an initial discharge capacity of the positive electrode F was 6.11 mAh/2 cm$^2$, and an initial discharge capacity ratio of the negative electrode C and the positive electrode F was 0.80.
In a manner the same as that of Example 1, charge/discharge was conducted, and an initial discharge capacity was 3.97 mAh. A total mass of a positive electrode active material and a negative electrode active material was 0.0409 g, a discharge capacity per mass of active material was 97 mAh/g, and a discharge capacity retention rate after 100 cycles of charge/discharge was 65%.

(Comparative Example 2)

By using the negative electrode B and the positive electrode G, in a manner the same as that of Example 1, a coin shaped lithium ion secondary battery was prepared.
An initial discharge capacity of the negative electrode B was 6.90 mAh/2 cm$^2$, an initial discharge capacity of the positive electrode G was 4.82 mAh/2 cm$^2$, and an initial discharge capacity ratio of the negative electrode B and positive electrode G was 1.43.
In a manner the same as that of Example 1, charge/discharge was conducted, and an initial discharge capacity was 2.92 mAh. A total mass of a positive electrode active material and a negative electrode active material was 0.0344 g, a discharge capacity per mass of active material was 85 mAh/g, and a discharge capacity retention rate after 100 cycles of charge/discharge was 92%.

(Comparative Example 3)

By using the negative electrode D and the positive electrode H, in a manner the same as that of Example 1, a coin shaped lithium ion secondary battery was prepared.
An initial discharge capacity of the negative electrode D was 6.26 mAh/2 cm$^2$, an initial discharge capacity of the positive electrode H was 5.90 mAh/2 cm$^2$, and an initial discharge capacity ratio of the negative electrode D and the positive electrode H was 1.06.
In a manner the same as that of Example 1, charge/discharge was conducted, and an initial discharge capacity was 5.59 mAh. A total mass of a positive electrode active material and a negative electrode active material was 0.0570 g, a discharge capacity per mass of active material was 98 mAh/g, and a discharge capacity retention rate after 100 cycles of charge/discharge was 93%.

(Comparative Example 4)

By using the negative electrode D and the positive electrode E, in a manner the same as that of Example 1, a coin shaped lithium ion secondary battery was prepared.
An initial discharge capacity of the negative electrode D was 6.26 mAh/2 cm$^2$, an initial discharge capacity of the positive electrode E was 5.52 mAh/2 cm$^2$, and an initial discharge capacity ratio of the negative electrode D and the positive electrode E was 1.13.
In a manner the same as that of Example 1, charge/discharge was conducted, and an initial discharge capacity was 4.73 mAh. A total mass of a positive electrode active material and a negative electrode active material was 0.0526 g, a discharge capacity per mass of active material was 90 mAh/g, and a discharge capacity retention rate after 100 cycles of charge/discharge was 85%.

(Comparative Example 5)

By using the negative electrode A and the positive electrode H, in a manner the same as that of Example 1, a coin shaped lithium ion secondary battery was prepared.
An initial discharge capacity of the negative electrode A was 5.82 mAh/2 cm$^2$, an initial discharge capacity of the positive electrode H was 5.90 mAh/2 cm$^2$, and an initial discharge capacity ratio of the negative electrode A and the positive electrode H was 0.99.
In a manner the same as that of Example 1, charge/discharge was conducted, and an initial discharge capacity was 4.41 mAh. A total mass of a positive electrode active material and a negative electrode active material was 0.0424 g, a discharge capacity per mass of active material was 104 mAh/g, and a discharge capacity retention rate after 100 cycles of charge/discharge was 90%.
In Table 2, test results of battery characteristics in Examples 1 to 3 and Comparative Examples 1 to 5, where various kinds of negative electrodes and positive electrodes were used are shown.
[Table 2]

|  | Negative electrode | Positive electrode | (1) | (2) | (3) | (4) | (5) |
|---|---|---|---|---|---|---|---|
| Example 1 | A | E | 1.05 | 4.75 | 0.0380 | 125 | 91 |
| Example 2 | A | F | 0.95 | 4.99 | 0.0416 | 120 | 85 |
| Example 3 | B | E | 1.25 | 4.33 | 0.0387 | 112 | 93 |
| Comparative example 1 | C | F | 0.80 | 3.97 | 0.0409 | 97 | 65 |
| Comparative example 2 | B | G | 1.43 | 2.92 | 0.0344 | 85 | 92 |
| Comparative example 3 | D | H | 1.06 | 5.59 | 0.0570 | 98 | 93 |
| Comparative example 4 | D | E | 1.13 | 4.73 | 0.0526 | 90 | 85 |
| Comparative example 5 | A | H | 1.06 | 4.41 | 0.0424 | 104 | 90 |
| (1) Initial discharge capacity of negative electrode/initial discharge capacity of positive electrode | | | | | | | |
| (2)Initial discharge capacity (mAh) | | | | | | | |
| (3) Mass of active material (negative electrode + positive electrode) (g) | | | | | | | |
| (4) Initial discharge capacity/active material (mAh/g) | | | | | | | |
| (5) Cycle characteristics (%) : Discharge capacity retention rate after 100 cycles of charge/discharge | | | | | | | |

From results of Examples 1 to 3, it was found that when a high capacity negative electrode and a high capacity positive electrode are combined at a particular discharge capacity ratio, a battery having high capacity per active material and excellent charge/discharge cycle characteristics can be obtained.

On the other hand, in Comparative Examples 1 and 2 where an initial discharge capacity ratio of a negative electrode and a positive electrode is outside a range of 0.9 to 1.30, a battery capacity was insufficient and, in Comparative Example 1, charge/discharge cycle characteristics was found to degrade. Further, in Comparative Examples 3 to 5 where a negative electrode D of which initial charge capacity is low and an initial efficiency is outside a range of the present invention was used, or a positive electrode H of which initial efficiency was outside a range of the present invention was used, even when an initial discharge capacity ratio of a  negative electrode and a positive electrode is within a range of the present invention, a battery capacity per active material was low.

The present invention is not limited to the embodiments. The embodiments are only illustrative examples, and all that has a configuration substantially the same as that of a technical idea described in claims of the present invention and that has similar effect is included in a technical range of the present invention.

**Claims**

1.    A lithium ion secondary battery comprising:

a positive electrode; and
a negative electrode,
wherein the negative electrode includes a negative electrode active material of which initial charge capacity is 1800 mAh/g or more and initial efficiency (initial discharge capacity/initial charge capacity) is 0.70 to 0.85, the positive electrode includes a positive electrode active material of which initial charge capacity is 160 mAh/g or more and initial efficiency (initial discharge capacity/initial charge capacity) is 0.75 to 0.90, and an initial discharge capacity ratio of the negative electrode and the positive electrode (initial discharge capacity of the negative electrode/initial discharge capacity of the positive electrode) is 0.90 to 1.30.

2.    The lithium ion secondary battery according to claim 1, wherein an initial discharge capacity ratio of the negative electrode and the positive electrode is 1.05 to 1.15.

3.    The lithium ion secondary battery according to claim 1 or claim 2, wherein the negative electrode active material is silicon oxide represented by $SiOx$ ($0.5 \leq x \leq 1.5$).

4.    The lithium ion secondary battery according to claim 1 or claim 2, wherein the negative electrode active material is a silicon composite that has a structure where silicon is dispersed in silicon dioxide and a molar ratio of Si/O of 0.67 to 2.0.

5.    The lithium ion secondary battery according to claim 4, wherein the silicon composite is covered with a carbon film.

**EP 2 665 111 A2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2997741 B
- JP 2002042806 A
- JP 11045742 A